Europäisches Patentamt

European Patent Office

Office européen des brevets

(19)

(11) **EP 1 184 662 B1**

(12) **EUROPEAN PATENT SPECIFICATION**

(45) Date of publication and mention
of the grant of the patent:
**26.04.2006 Bulletin 2006/17**

(51) Int Cl.:
*G01N 21/27* (2006.01)    *G01N 21/31* (2006.01)
*G01J 3/433* (2006.01)    *G01J 3/26* (2006.01)
*G01J 3/06* (2006.01)

(21) Application number: **01906343.7**

(22) Date of filing: **27.02.2001**

(86) International application number:
**PCT/JP2001/001455**

(87) International publication number:
**WO 2001/063249 (30.08.2001 Gazette 2001/35)**

(54) **INTERFERENCE FILTER TRANSMISSION WAVELENGTH SCANNING PHOTOMETER**

WELLENLÄNGENABTASTENDES PHOTOMETER MIT EINEM
TRANSMISSIONSINTERFERENZFILTER

PHOTOMETRE A BALAYAGE EN LONGUEUR D'ONDE D'EMISSION A FILTRE ANTIPARASITE

(84) Designated Contracting States:
**DE**

(30) Priority: **28.02.2000 JP 2000051329**

(43) Date of publication of application:
**06.03.2002 Bulletin 2002/10**

(73) Proprietor: **Watanabe, Atsuo
Hino-shi,
Tokyo 191-0065 (JP)**

(72) Inventor: **Watanabe, Atsuo
Hino-shi,
Tokyo 191-0065 (JP)**

(74) Representative: **Diehl & Partner
Patentanwälte
Augustenstrasse 46
80333 München (DE)**

(56) References cited:
**EP-A- 0 510 856**     **JP-A- 2 240 546**
**JP-A- 5 267 770**     **US-A- 4 090 792**
**US-A- 4 590 374**

**Description**

**Field of the Invention**

The present invention relates to a convenient and cheap analytical apparatus for determining the concentration of a component of interest in a sample without interference of the coexistent components by applying light absorption of the component of interest.

More particularly, the present invention relates to the convenient and cheap analytical apparatus which is realized by the procedures of:

preparing an interference filter that has a means for scanning the transmission wavelength periodically;
detecting the intensity change of light whose wavelength is scanned by the interference filter and which transmits through the sample;
determining the concentration of the component of interest by examining the period of the detected electric signal.

**Background of the Invention**

It is popular to detect a component of interest in a sample or to determine its concentration by applying the light absorption of the component of interest. The simplest method is to measure intensity changes of a monochromatic light transmitting through the sample in which the component of interest absorbing the monochromatic light is contained. For instance, an ultraviolet absorption photometer for monitoring water quality is well-known. This photometer utilizes the phenomenon that an organic waste in water absorbs light of 253.7 nm from a mercury lamp, and it consists of a light source, a sample cell, a detector and an amplifier. By this method that is called single beam method, we have often measured errors because an interfering value by the intensity change of the light source is not able to differ from the measuring value by the light absorption of the organic waste.

There is a double beam method which removes this defect of the single beam method. In the double beam method, a beam from a light source splits into two beams, that is, one for a sensing beam and the other for a reference beam, and the measuring value is obtained as the difference or ratio between those intensities. It means that the intensity change of the sensing beam is standardized by the intensity of the reference beam. By adopting the double beam method, the intensity change of the light source does not affect the measuring results.

Double wavelength spectrometry is another method not to affect the measuring results by the intensity change of the light source. In this method, two different monochromatic beams are alternately transmitted through or reflected on a sample, and the absorption intensity of a component of interest in the sample is obtained by measuring the difference or ratio between those intensities. The wavelength of the one monochromatic beam for reference is selected different from the absorption wavelength of the component of interest, and the wavelength of the other monochromatic beam for sensing is equal to the absorption wavelength of the component of interest, and the intensity change of the monochromatic beam for sensing is standardized by the intensity of the monochromatic beam for reference. Therefore, this method has no measuring error by the intensity change of the light source.

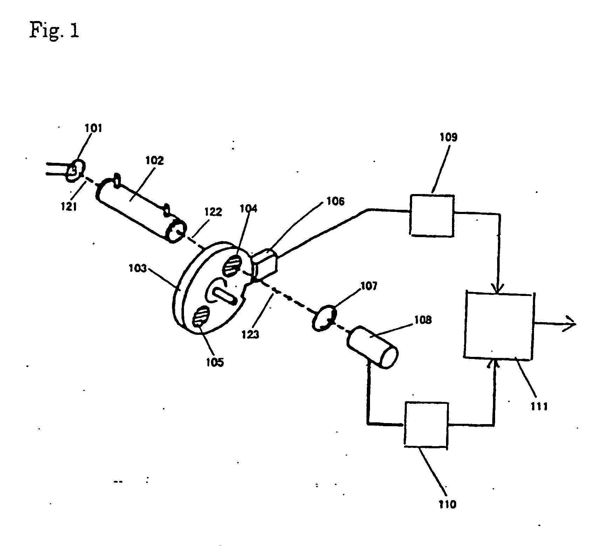

The present invention is aimed at developing an apparatus which has no measuring error by the intensity change of the light source like the double wavelength spectrometry. A prior art that is one kind of the double wavelength spectrometry will be explained by referring to figure 1.

Figure 1 is a block diagram of a filter correlation infrared analyzer, in which infrared beam 121 radiated from an infrared source 101 transmits through a sample cell 102, and an infrared beam after transmitting 122 goes ahead to a modulator 103. The sample cell 102 is a pipe, which has infrared transmission windows on both ends, and an inlet and an outlet on places near to both ends. A component of interest in sample gas flowing through the sample cell absorbs infrared of a specific wavelength, and the infrared beam after transmitting 122 loses the energy at the specific wavelength. The modulator 103 is a rotating disk mounting filters, and one of those is a sensing filter 104 whose maximum transmission wavelength is equal to the specific wavelength absorbed by the component of interest, and the other is a reference filter 105 whose maximum transmission wavelength is different from the specific wavelength. By rotating the modulator, the filters cross the infrared beam after transmitting 122 periodically. The infrared beam after transmitting 122 is modulated when the beam transmits through the sensing filter 104 and the reference filter 105 alternately. The modulated infrared beam 123 focuses on an infrared sensor 108 by a focusing lens 107, and is detected as an electric signal. The detected electric signal is amplified by a head amplifier 110, and is put in a synchronous rectifier 111. On the other hand, a synchronous signal detector 106 detects the synchronous signal of the modulator, and puts the synchronous signal in a phase adjuster 109. The phase adjuster adjusts the synchronous signal and puts the signal in the synchronous rectifier 111. The synchronous rectifier 111 rectifies the electric signal synchronizing with the synchronous signal, and obtains a measuring signal corresponding to the concentration of the component of interest in the sample.

By more careful consideration, the gaseous or liquid samples contain many coexisting components with the component of interest. Some of the components when analyzing the component of interest, such as water vapor in the case of analyzing nitrogen monoxide in flue gas and water or an electrolyte in water in the case of analyzing glucose dissolved in water.

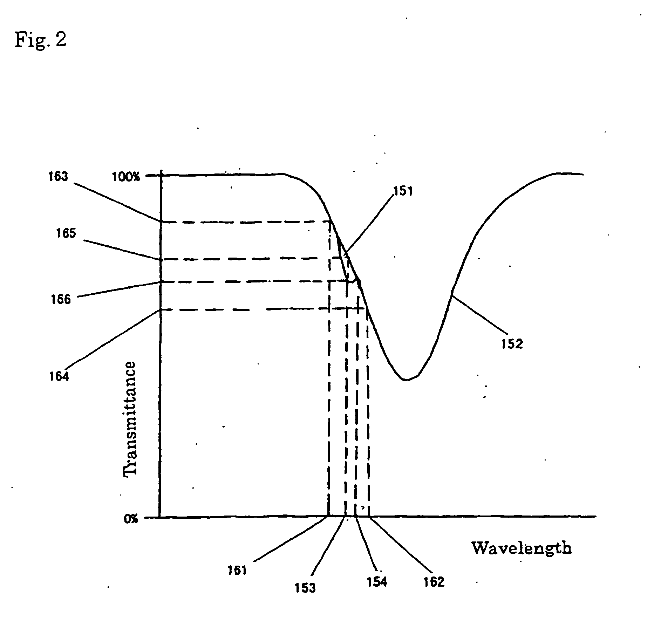

Details about the interfering by the coexisting components will be described by referring to figure 2. A spectrum of interfering components 152 has no peak at an absorption wavelength of the component of interest 153 but tails over it. Even if the slope of the tailing is small, the tailing often gives analyzing results with fatal errors according to the increasing of the concentration of the interfering components. The double wavelength spectrometry often has the problem that the tailing of the spectrum of the interfering components gives analyzing results with fatal errors, even if the reference wavelength 154 is selected near the absorption wavelength of the component of interest 153.

An objective of the present invention is an analyzing apparatus which removes the interfering by the tailing spectrum of the interfering components and determines the exact concentration of the component of interest by applying the light absorption of the component of interest. It is a further objective of the present invention to provide a convenient and cheap analyzing apparatus measuring non-destructively and non-invasively to a person.

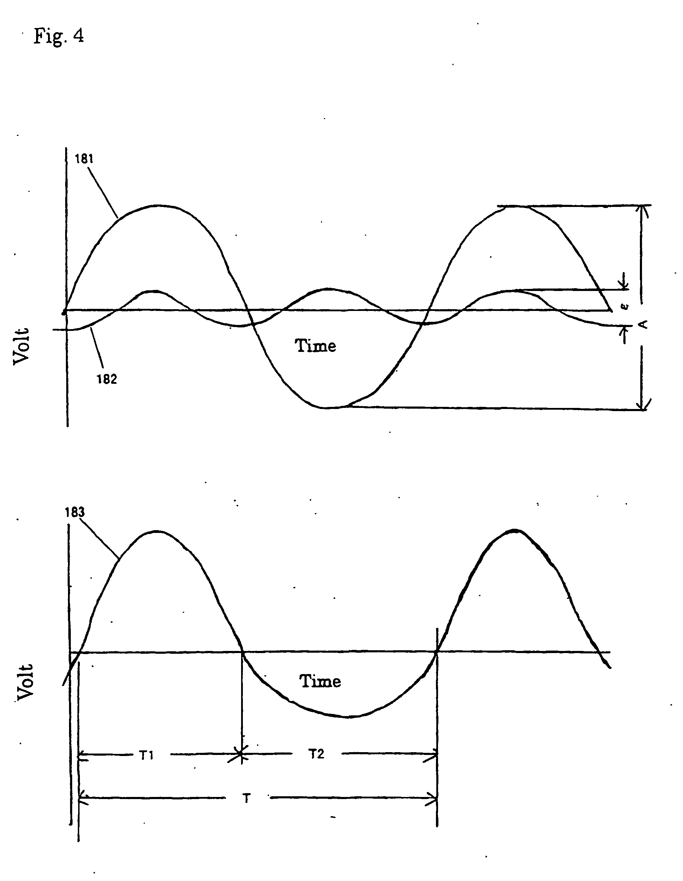

It was known to determine a component of interest by making an effective use of a scanning wavelength. In US 4090792, the wavelength is scanned in a manner wherein an interference pattern filter executes an oscillating movement, i.e., the interference pattern filter oscillates at a right angle to the optical axis and in the direction of its change of wavelength. In other cases, the wavelength is scanned by inclining the normal of the interference filter to the optical axis. The signals which are detected by an infrared sensor are periodical functions in the coordinates of amplitude and phase which correspond to the Volt axis and the Time axis in Fig. 4 as enclosed herewith. Changes of the signals caused by infrared absorption of the component of interest influence not only the amplitude but also the phase. This means that both variables of the amplitude and the phase contain an information for determining the component of interest. All the prior art utilizes the information in the amplitude for determining the component of interest. The detected signals including an information in the amplitude are processed by synchronizing it with a modulation frequency. In particular, a phase synchronous rectifier serves in the case of US 4090792, a synchronous detector is used in the case of US 4590374, and an output signal on a line from the drive motor, which corresponds to the rotation frequency of the interference filter, is provided in the case of EP 0510856 for processing the signals.

## Disclosure of the invention

The present invention provides an interference filter transmission wavelength scanning photometer for determining a concentration of a component of interest in a sample comprising

a light source;

an interference filter having means for periodically scanning the transmission wavelength; and an infrared sensor,

wherein said photometer is arranged to adjust the scanning range of the transmission wavelength such that the center wavelength of the scanning range is equal to an absorption wavelength of said component of interest and wherein a light beam from said light source is detected as an electrical signal by said infrared sensor after transmitting through said interference filter and transmitting or reflecting from said sample put in front or at rear of said interference filter, characterized in that the photometer further comprises a zero crossing detector arranged to take out a full period T (time for every other zero crossing) of the AC component of the electrical signal provided by the infrared sensor and a half period $T_1$ (time for every zero crossing) of the AC component and in that it is arranged to determine the concentration of the component of interest from the ratio $(T-2T_1)/T$.

The photometer of the present invention can determine the concentration of a component of interest in a sample without the interference of the coexistent components by operations comprising the following steps.

Deciding the range of scanning the transmission wavelength of said interference filter, so that the center of the small change of the wavelength induced by scanning the transmission wavelength periodically is equal to the absorption wavelength of said component of interest.

Detecting the intensity of the light beam from said light source as an electric signal by said infrared sensor in which the light beam is put, after transmitting through said interference filter and transmitting or reflecting on said sample put in front or rear of said interference filter;

Obtaining a full period $\underline{T}$ (time for every other zero crossing) of the AC component and half period $\underline{T}_1$ (time between the rise and fall zero crossing) of the AC component which said zero crossing detector takes out of the AC component of said electric signal;

Determining the concentration of said component of interest by calculating the ratio $(T-2T_1)/T$.

Incidentally, a few methods for scanning the transmission wavelength of the interference filter are well-known. One method scans the transmission wavelength by changing the refractive index of a spacer layer of gas which pressurizes up and down, keeping the displacement between the metal layers constant. In another method, the displacement between the metal layers is changed for scanning the transmission wavelength. A still further method which is suitable for the present invention is one that scans the transmittance wavelength by inclining the normal of the interference filter to the optical axis. The best mode for carrying out the present invention is the interference filter transmission wavelength scanning photometer wherein the transmission wavelength is scanned by swinging the interference filter periodically as inclining the normal of the interference filter to the optical axis.

Brief Description of the Drawings

Figure 1 is a block diagram of a filter correlation infrared analyzer as an example of the prior art.
Figure 2 is a spectrogram showing the relation between a spectrum of a component of interest and one of interfering components.
Figure 3 is a spectrogram showing spectra of an interference filter when inclining its normal to the optical axis;
Figure 4 is a chart showing the relation between an electrical signal due to a component of interest and one due to interfering components.
Figure 5 is a block diagram showing the preferred embodiment of an interference filter transmission wavelength scanning photometer of the present invention.
Figure 6 is a sketch illustrating an optical sampling system by which an optical signal about the concentration of glucose in blood is obtained from a human lip.
Figure 7 is a spectrogram of main components from which a sample is composed for a working example of the present invention.
Figure 8 is a correlation plot of measuring values by an interference filter transmission wavelength scanning photometer of the present invention to glucose concentration in human blood measured by a commercial glucose meter.

The reference signs in the drawings are shown below.

| 1 | a light source |
|---|---|
| 2 | a long wavelength pass filter |
| 3 | an interference filter |
| 4 | an axis |
| 5 | S-poles |
| 6 | N-poles |
| 7 | forcing coils |
| 8 | a lens |
| 9 | a quartz rod |
| 10 | a sample |
| 11 | an infrared sensor |
| 12 | an oscillation circuit |
| 13 | a head amplifier |
| 14 | an alternating amplifier |
| 15 | a zero crossing detector |
| 16 | a microprocessor |
| 17 | a display device |
| 18 | a key board |
| 19 | a communication port |
| 31 | a quartz rod |
| 32 | a header |
| 33 | an infrared sensor |
| 34 | a human lip |
| 35 | a suction pump |
| 36 | a suction pressure regulator |
| 101 | an infrared source |
| 102 | a sample cell |
| 103 | a modulator |
| 104 | a sensing filter |
| 105 | a reference filter |
| 106 | a synchronous signal detector |
| 107 | a focusing lens |
| 108 | an infrared sensor |

| 109 | a phase adjuster |
| --- | --- |
| 110 | a head amplifier |
| 111 | a synchronous rectifier |
| 151 | a spectrum of a component of interest |
| 152 | a spectrum of interfering components |
| 153 | an absorption wavelength of a component of interest |
| 154 | a reference wavelength |
| 161 | a short wavelength limit |
| 162 | a long wavelength limit |
| 163 | a high transmittance limit |
| 164 | a low transmittance limit |
| 165 | a transmittance for containing no component of interest |
| 166 | a transmittance for containing a component of interest |
| 181 | an electrical signal due to interfering components |
| 182 | an electrical signal due to a component of interest |
| 183 | an actual observed signal |

Most preferable embodiment for Carrying out the Invention

Reference will now be made in detail to the preferred embodiment of the interference filter transmission wavelength scanning photometer of the present invention and the principle for determining the concentration of a component of interest as illustrated in the attached drawings.

In the present invention, an interference filter is swung periodically to incline the normal of the interference filter to the optical axis, and thereby the peak transmission wavelength of the interference filter is scanned in a narrow range between a short wavelength limit 161 and a long wavelength limit 162 around an absorption wavelength of a component of interest 153 in a sample as shown in figure 2.

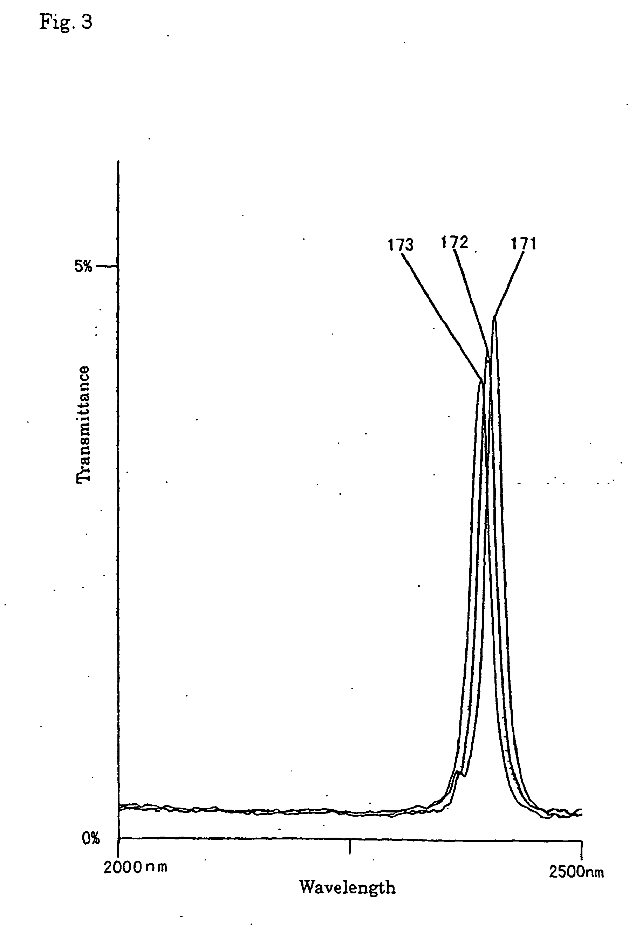

It is well-known that the transmission wavelength is changed by inclining the normal of the interference filter to the optical axis. Figure 3 shows experimental spectra 171,172 and 173 of an interference filter which is inclined at the angle of 15, 20 and 25 degrees between its normal and the optical axis. The maximum transmission wavelengths are 2289 nm, 2273 nm and 2257 nm respectively. (The scale of the horizontal axis of all spectrograms is linear to wave numbers but all numerical expressions are converted into wavelengths for consistent description.)

The transmittance which is observed after the light beam transmits through the sample having a spectrum of interfering components shown in figure 2 varies periodically from a high transmittance limit 163 to a low transmittance limit 164, by change of the maximum transmission wavelength from the short wavelength limit 161 at the angle of 25 degrees to the long wavelength limit 162 at the angle of 15 degrees. An electric signal which is proportional to the intensity of the light beam transmitting through the sample is detected by an infrared sensor, and it is varied periodically like an electric signal due to the interfering component 181 in figure 4. It is defined here that the electric signal due to the interfering component 181 takes the maximum value to positive when the angle is 25 degrees, that is, at the high transmittance limit 163, and the minimum value to negative when the angle is 15 degrees, that is, at the low transmittance limit 164.

It will now be explained what happens when a component of interest in the sample will be increased. By increasing the component of interest, a spectrum of the component of interest 151 in figure 2 is enlarged. As enlarging the spectrum 151, transmittance to the wavelength at the center angle between 15 and 25 degrees decrease from a transmittance for containing no component of interest 165 to a transmittance for containing the component of interest 166. By decreasing the transmittance, the electrical signal due to the component of interest 182 in figure 4 joins in the electric signal due to the interfering components 181, and this electric signal 182 has negative peaks when the electric signal due to the interfering components 181 is in the middle between maximum and minimum. After increasing the component of interest, an actual observed signal 183 is a synthetic electrical signal which is the sum of the electric signal due to the interfering components 181 and the electric signal due to the component of interest 182. The information which has to be obtained is about the amplitude of the electric signal due to the component of interest 182.

Further explanation about how to obtain the information about the amplitude of the electrical signal due to the component of interest from the actual observed signal 183 will be given the following. The electric signal due to the interfering components is large and is written like the below equation,

$$F = A \sin \omega t$$

where F is the electrical signal due to the interfering component, A is its amplitude and $\omega$ is the angular frequency which is given like $\omega = 2\pi/T$, when T is a full period. As the electric signal due to the component of interest is extremely smaller than the electric signal F, a change of the electric signal F can be hardly observed with the joining of the electric signal due to the component of interest. But paying attention to zero crossing points which are points when the electric signal F is zero, an increase of the amplitude of the electric signal due to the component of interest lets the electric signal F at zero crossing down as a variation of $(1/2)\,\varepsilon$, where $\varepsilon$ is an amplitude of the electric signal due to the component of interest 182.

Here, time lags at the zero crossing points are estimated when letting the electric signal F at zero crossing down as the variation of $(1/2)\,\varepsilon$. The electric signal F is differentiated as the below equation for obtaining slopes of the electric signal F at the zero crossing.

$$dF/dt = A\,\omega\,\cos\omega\,t$$

Slopes at the phase of $\omega t = \pi$ and $2\pi$ are $-2\pi A/T$ and $2\pi A/T$. By letting the electric signal F at the zero crossing down as the variation of $(1/2)\,\varepsilon$, the time lags at the zero crossing of the electric signal F are $\varepsilon\,T/(4\pi\,A)$ fast at the phase of $\omega t = \pi$ and $\varepsilon\,T/(4\,\pi\,A)$ slow at the phase of $\omega t = 2\pi$. A time difference between a prolonged half period $T_2$ and a shortened half period $T_1$ of the actual observed signal 183 is obtained like shown below by the above estimation.

$$T_2 - T_1 = \varepsilon\,T/(\pi\,A)$$

The ratio of the time difference to the full period is shown like $(T_2-T_1)/T = \varepsilon/(\pi\,A)$ and this result shows that the ratio is a proportion to the amplitude $\varepsilon$ of the electrical signal due to the component of interest 182. This study demonstrates that it is possible to determine the concentration of the component of interest without the interference of coexisting components by examining in the full period (T) and the one half period ($T_1$), as the another half period $T_2$ can be calculated as the difference of the full period T and the one half period $T_1$.

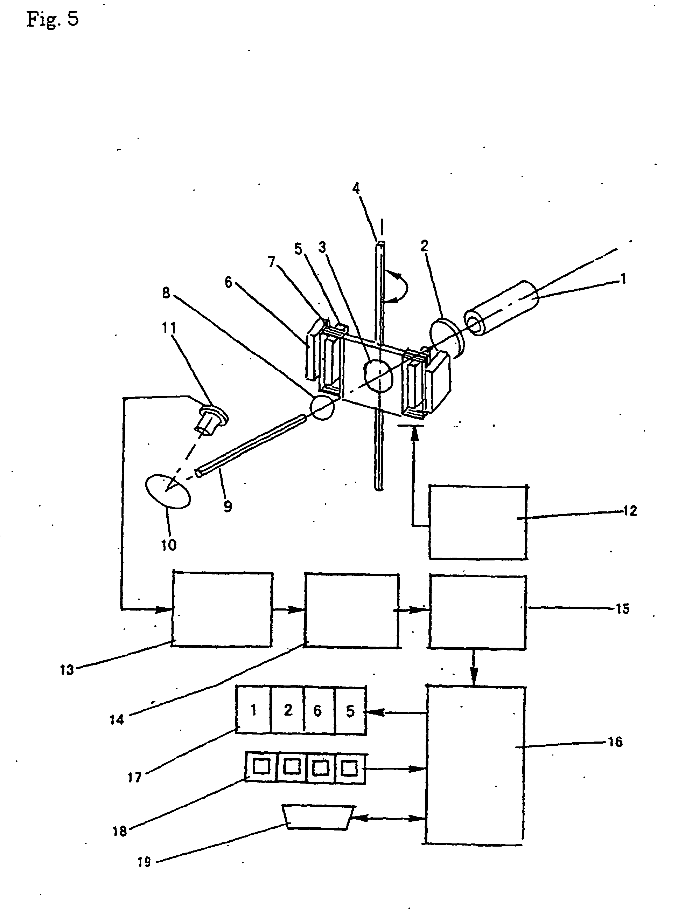

The construction of the interference filter transmission wavelength scanning photometer of the present invention will be explained by referring to figure 5. Figure 5 shows two separate parts, that is, one is a diagram of an optical layout and the other is a block diagram of electric circuits. In figure 5, shorter wavelengths of the light beam from a light source 1 are cut off by a long wavelength pass filter 2, and longer wavelengths of the light beam pass through the filter and go ahead to an interference filter 3. The interference filter 3 is fixed with forcing coils 7 and can swing about a central axis 4. S-poles 5 and N-poles 6 of a magnet are installed on both sides of wirings of the forcing coils 7, and by giving the forcing coils 7 an alternating current, the interference filter starts to swing about the central axis 4. The angle between the normal of the interference filter and the optical axis is initially set at the angle of 20 degrees so that the angle changed by the swinging is within the angle from 15 to 25 degrees.

A modulated light beam by swinging the interference filter is focused on an end surface of a quartz rod 9 by a lens 8. The quartz rod 9 guides the light beam near to a sample 10, and the light beam from another end surface of the quartz rod irradiates the sample 10. A part of the light beam reflected on the surface of the sample is put in an infrared sensor 11. The light beam which is modulated by swinging the interference filter and reflected on the sample 10 is detected by the infrared sensor 11 as an electric signal. The electric signal is sent to the part of the electric circuits.

In the part of the electric circuits, an oscillation circuit 12 is provided which supplies alternative current to the forcing coils 7 for swinging the interference filter 3. It is extremely important to keep swinging the interference filter stable because swinging the interference filter forced by the alternative current is the origin of all signals. Therefore, a feedback control system is adopted to keep the energy swinging the interference filter constant, measuring the swinging velocity by putting sensing coils at the same position as that of the forcing coils. The electric signal which is induced in the optical system and detected by the infrared sensor 11 is amplified by head amplifier 13, and its AC component is amplified by an alternative amplifier 14 and put in a zero crossing detector 15, having a basic frequency decided by the swinging frequency of the interference filter. The zero crossing detector generates an interrupt signal which informs a microprocessor 16 times when the rising or falling electric signals cross the zero level. The microprocessor 16 memorizes the times of every zero crossing by aid of an inner timer. The full period T is obtained as the time from the rising zero crossing to the next rising zero crossing and the half period $T_1$ as the time from the rising zero crossing to the falling zero crossing. After acquiring data for a certain integrating time, a remainder obtained by subtracting twice the value of an integrated half period $\Sigma T_1$ from an integrated full period $\Sigma T$ divided by the integrated full period $\Sigma T$ gives a ratio that is defined as a distortion factor here. After the concentration of the component of interest (for instance, the glucose concentration in blood for the glucose meter) was calibrated by using the distortion factors, the concentration of the component of interest is determined by the distortion factor and its value is displayed and communicated. A display device 17 which displays the concentration value etc., a key board by which the apparatus is operated and a communication port 19 through which many information including the measuring value can be communicated are mounted with the microprocessor.

Working Example of the Invention

A working example of the present invention for determining the concentration of the glucose in the blood will be described in the following.

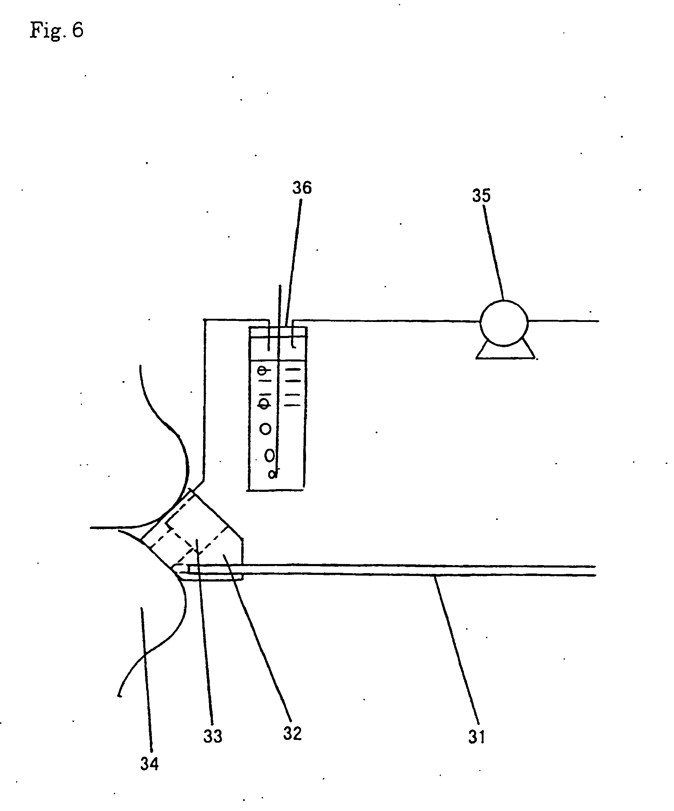

The human lip has a mass of the capillary blood vessels under the outermost skin, and the red lip is visible to the naked eye. The interference filter transmission wavelength scanning photometer of the present invention is applied for determining the glucose concentration in the blood by the diffuse reflectance on this surface. An optical sampling system is shown in figure 6. Quartz rod 31 is the same part as part 9 in figure 5. Header 32 holds the quartz rod which guides the light beam to the human lip 34 and an infrared sensor 33 which detects the reflecting light on the human lip 34. A suction pump 35 with a suction pressure regulator 36 sucks a cavity between the human lip 34 and the infrared sensor 33, to stick the surface of the human lip 34 on the header 32.

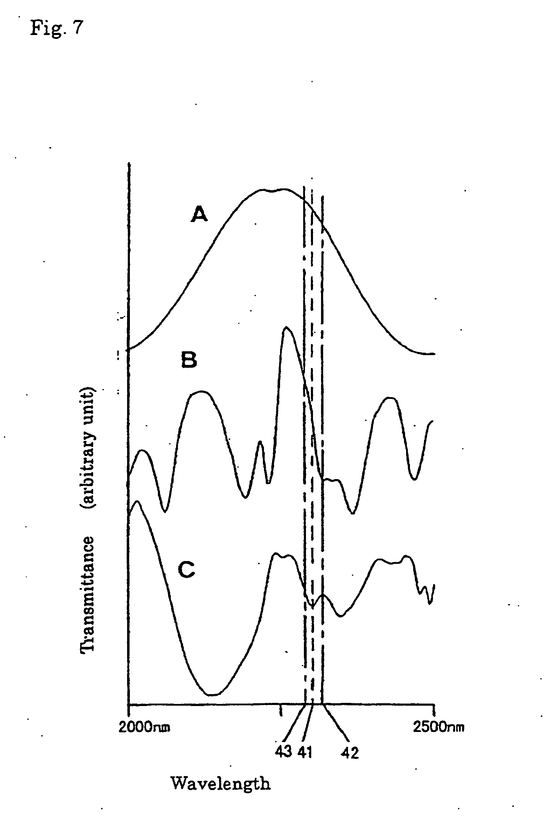

Figure 7 shows spectra of the main components in the blood, in which a spectrum of water is signed by A, a spectrum of blood after removing the water from the blood by B, and a difference spectrum of the glucose in the water obtained by subtracting the spectrum of the water by C.

It has been designed in the working example of the present invention that a change of the transmittance of the glucose at the wavelength of 2273 nm (position signed 41) has been adopted for determining the concentration of the glucose in the blood. The maximum transmission wavelength of the interference filter changes from 2289 nm (position signed 42) to 2258 nm (position signed 43), centering 2273 nm. Other specifications for the instrumental design are shown below.

| Specifications for the instrumental design | |
| --- | --- |
| frequency of swinging the interference filter: | 150 Hz |
| quartz rod: | uter diameter of 1.5 mm; length of 160 mm |
| timer clock for measuring period: | 8 MHz |
| data integrating time: | 300 seconds |
| clock of microprocessor: | 8 MHz |

Depending on the above specifications for the instrumental design, a prototype of the interference filter transmission wavelength scanning photometer has been trially manufactured, and by using this prototype the glucose concentration in blood has been determined non-invasively. The data for each data integrating time are divided into ten sections and the distortion factors for the sections are calculated. A measuring value for each data integrating time is an average of six medians from ten calculated distortion factors.

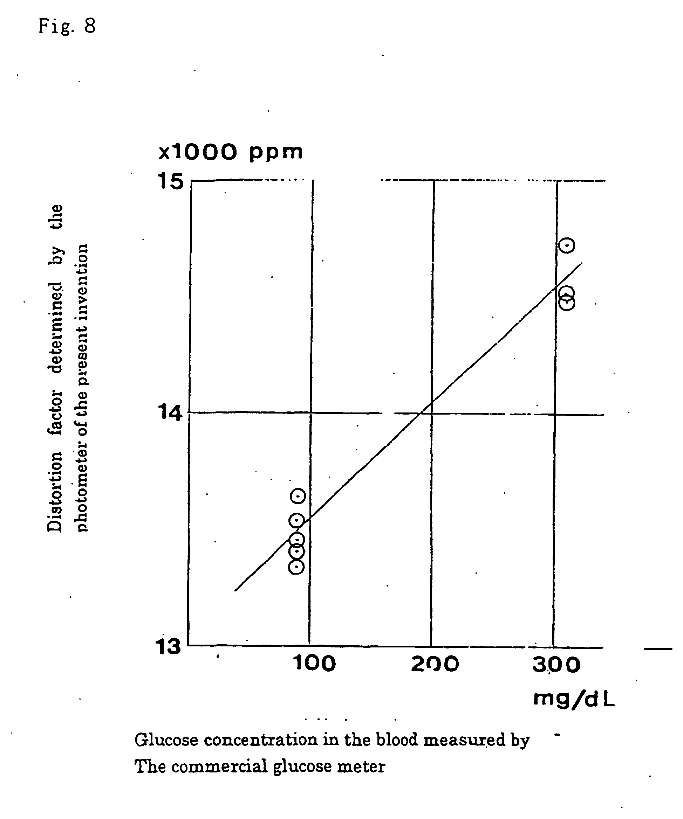

The glucose concentration in the blood of a healthy test person with an empty stomach has been 89 mg/dL measured by a commercial glucose meter. Keeping this condition, the interference filter transmission wavelength scanning photometer of the present invention has been applied for determining the glucose concentration in the blood, and five measuring values have been obtained. Subsequently, between 40 minutes later and 70 minutes later from the time when the test person drank a cup of syrup which was hot water with dissolved glucose of 75 g, three measuring values have been obtained. At 60 minutes later from the time when the test person drank a cup of the syrup, the glucose concentration in the blood of the test person has been 308 mg/dL measured by the commercial glucose meter. Assuming that the glucose concentration in the blood of the test person has been regarded as constant between 40 minutes later and 70 minutes later from the time when the test person drank a cup of the syrup, a correlation plot obtained by these experiments is shown in figure 8. It is a preferable good result that the coefficient of correlation between the measuring value by the interference filter transmission wavelength scanning photometer of the present invention and the glucose concentration in the blood by the commercial glucose meter is 0.98.

It has been shown that a non-invasive determination of the glucose concentration in the blood is possible with the photometer scanning the transmission wavelength of the interference filter of the present invention.

Industrial Applicability

The determination of the concentration of the component of interest by applying the light absorption of the material has desirable features such as the fact that it is non-destructive and non-invasive to a person. But in many cases, as the tailing of the spectra of coexisting components overlaps the absorption wavelength of the component of interest, it is difficult to determine the concentration of the component of interest by using only one wavelength. Therefore many wavelengths are used for the determination, after all a spectrometry is applied for it. Although such a spectrometry has wide application fields, it needs a large equipment and is expensive. For these reasons, the analyzing apparatus with applying the light absorption of the material is desirable, but it is not used so commonly. For example, there is no glucose meter with applying the light absorption of the material in the Japanese market, although many glucose meters with an enzymatic method are commonly used.

The present invention is able to achieve the same performance as the spectrometry for one component in the sample by a simple composition. The present invention is industrially valuable, because it picks up a desirable feature for determining the concentration of the component of interest by applying the light absorption of the material, and provides an analytical apparatus will good performance as to the costs and contributes technically to industrial fields, environmental pollution control, and medical fields

**Claims**

1. An interference filter transmission wavelength scanning photometer for determining a concentration of a component of interest in a sample'comprising
   a light source (1) ;
   an interference filter (3) having means (4-7) for periodically scanning the transmission wavelength; and an infrared sensor (11),
   wherein said photometer is arranged to adjust the scanning range of the transmission wavelength such that the center wavelength of the scanning range is equal to an absorption wavelength of said component of interest and wherein a light beam from said light source is detected as an electrical signal by said infrared sensor after transmitting through said interference filter and transmitting or reflecting from said sample put in front or at rear of said interference filter, **characterized in that** the photometer further comprises a zero crossing detector arranged to take out a full period T (time for every other zero crossing) of the AC component of the electrical signal provided by the infrared sensor and a half period $T_1$ (time for every zero crossing) of the AC component and **in that** it is arranged to determine the concentration of the component of interest from the ratio $(T-2T_1)/T$.

2. The interference filter transmission wavelength scanning photometer according to claim 1, arranged to scan the transmission wavelength by swinging the interference filter (3) periodically so as to incline the normal of said interference filter (3) to the optical axis.

**Patentansprüche**

1. Transmissionswellenlängen-Scanningphotometer mit Interferenzfilter für die Bestimmung der Konzentration einer interessierenden Komponente in einer Probe, umfassend:

   eine Lichtquelle (1);
   ein Interferenzfilter (3) mit Mittel (4-7) zum periodischen Scannen der Transmissionswellenlänge; und einen Infrarotsensor (11),

   wobei das Photometer so eingerichtet ist, dass es den Bereich, in dem die Transmissionswellenlänge gescannt wird, so einstellt, dass die mittlere Wellenlänge des gescannten Bereichs gleich einer Absorptionswellenlänge der interessierenden Komponente ist, und wobei ein Lichtstrahl von der Lichtquelle, nachdem er durch das Interferenzfilter transmittiert und nachdem er durch die Probe transmittiert oder von der Probe reflektiert wurde, wobei sich die Probe vor oder hinter dem Interferenzfilter befindet, durch den Infrarotsensor als ein elektrisches Signal detektiert wird, **dadurch gekennzeichnet, dass** das Photometer außerdem einen Nulldurchgangsdetektor umfasst, der dazu eingerichtet ist eine volle Periode T (Zeit für jeden zweiten Nulldurchgang) der AC-Komponente des von dem Infrarotsensor bereitgestellten elektrischen Signals und eine Halbperiode $T_1$ (Zeit für jeden Nulldurchgang) der AC-Komponente herauszunehmen und dass das Photometer zur Bestimmung der Konzentration der interessierenden Komponente aus dem Verhältnis $(T-2T_1)/T$ eingerichtet ist.

2. Transmissionswellenlängen-Scanningphotometer mit Interferenzfilter nach Anspruch 1, das so eingerichtet ist, dass es die Transmissionswellenlänge durch periodisches Schwingen des Interferenzfilters (3) scannt, sodass die Normale des Interferenzfilters (3) relativ zur optischen Achse geneigt ist.

**Revendications**

1. Photomètre à balayage de longueur d'onde de transmission par un filtre d'interférences destiné à déterminer une concentration d'un composant concerné dans un échantillon comprenant

   une source de lumière (1),
   un filtre d'interférences (3) comportant un moyen (4 à 7) destiné à faire balayer périodiquement la longueur d'onde de transmission, et un capteur infrarouge (11),
   dans lequel ledit photomètre est agencé pour ajuster la plage de balayage de la longueur d'onde de transmission de manière à ce que la longueur d'onde centrale de la plage de balayage soit égale à une longueur d'onde d'absorption dudit composant concerné, et dans lequel un faisceau de lumière provenant de ladite source de lumière est détecté sous forme d'un signal électrique par ledit détecteur infrarouge après une transmission au travers dudit filtre d'interfiérences et une transmission ou une réflexion à partir dudit échantillon placé sur l'avant ou à l'arrière dudit filtre d'interférences, **caractérisé en ce que** le photomètre comprend en outre un détecteur de passage par zéro agencé pour prélever une période T complète (un temps tous les deux passages par zéro) de la composante alternative du signal électrique procuré par le capteur infrarouge et une demi -période $T_1$ (un temps pour chaque passage par zéro) de la composante alternative, et **en ce qu'**il est agencé pour déterminer la concentration du composant concerné à partir du rapport $(T-2T_1)/T$.

2. Photomètre à balayage de longueur d'onde de transmission par un filtre d'interférences selon la revendication 1, agencé pour faire balayer la longueur d'onde de transmission en faisant osciller de façon périodique le filtre d'interférences (3) afin d'incliner la normale dudit filtre d'interférences (3) par rapport à l'axe optique.

Fig. 1

Fig. 2

Fig. 3

## Fig. 4

## Fig. 5

Fig. 6

Fig. 7

Fig. 8

Glucose concentration in the blood measured by
The commercial glucose meter